Europäisches Patentamt

**European Patent Office**

Office européen des brevets

(19)

(11) Veröffentlichungsnummer: **0 021 266
B1**

(12) **EUROPÄISCHE PATENTSCHRIFT**

(45) Veröffentlichungstag der Patentschrift:
01.02.84

(21) Anmeldenummer: **80103282.2**

(22) Anmeldetag: **12.06.80**

(51) Int. Cl.³: **B 62 J 5/00**

(54) **Elektrische Beleuchtungsanlage für Fahrräder.**

(30) Priorität: **18.06.79 GB 7921095**

(43) Veröffentlichungstag der Anmeldung:
**07.01.81 Patentblatt 81/1**

(45) Bekanntmachung des Hinweises auf die Patenterteilung:
**01.02.84 Patentblatt 84/5**

(84) Benannte Vertragsstaaten:
**AT BE CH DE FR IT LI LU NL SE**

(56) Entgegenhaltungen:
**DE - A - 2 427 740
FR - A - 800 933**

(73) Patentinhaber: **ULO-Werk Moritz Ullmann GmbH + Co.
KG, Robert-Bosch-Strasse 1-12, D-7340 Geislingen (DE)**

(72) Erfinder: **Ullmann, Moritz, Weilerstrasse 20,
D-7340 Geislingen (DE)**
Erfinder: **Ullmann, Manfred, Danziger Strasse 18,
D-7340 Geislingen (DE)**
Erfinder: **Frank, Günther, Falkenweg 4, D-7332 Eislingen
(DE)**

(74) Vertreter: **Wilhelm, Hans-Herbert, Dr.-Ing. et al,
Patentanwälte Dr.-Ing. Hans-Herbert Wilhelm Dipl.-Ing.
Hanjörg Dauster Gymnasiumstrasse 31B,
D-7000 Stuttgart 1 (DE)**

Elektrische Beleuchtungsanlage für Fahrräder

Die Erfindung betrifft eine elektrische Beleuchtungsanlage für Fahrräder mit einem Dynamo, mit einem Ansteuerkreis, der in Reihe einen ersten und einen zweiten Transistor aufweist, bei deren gleichzeitigem Ansteuern ein Relais einen Lampenstromkreis vom Dynamo auf eine Hilfsspannungsquelle umschaltet, mit einem Zeitschaltglied, das oberhalb eines ersten, unteren Grenzwertes der Dynamospannung anspricht, um den ersten Transistor anzusteuern, wobei das Zeitschaltglied in seiner Rückstellung zeitverzögert ist, sowie mit einer einen Glättungskondensator beinhaltenden Auslöseschaltung, die die im Ruhezustand vorhandene Ansteuerung des zweiten Transistors bei Überschreiten eines zweiten, höheren Grenzwertes der Dynamospannung unterbricht.

Eine elektrische Beleuchtungsanlage dieser Art ist aus der DE-A-2 427 740 bekannt. Bei dieser elektrischen Beleuchtungsanlage wird abhängig von der vom Dynamo erzeugten Spannung die Hilfsstromquelle hinzugeschaltet, wenn die Dynamospannung einen Mindestwert unterschreitet. Dabei kann der Fall auftreten, daß das Relais im Bereich bestimmter Dynamodrehzahlen zwischen einem die Hilfsspannungsquelle in Form einer Batterie zu schaltenden und einem den Dynamo zu schaltenden Zustand ständig alternierend umgeschaltet wird. Das Fahrradlicht flackert dann, was unerwünscht ist.

Aufgabe der Erfindung ist es, eine elektrische Beleuchtungsanlage für Fahrräder zu schaffen, bei der ein instabiler Zustand, insbesondere ein ständiges Umschalten des Relais verhindert wird.

Eine weitere Aufgabe ist es, eine Ausführungsform dieser Beleuchtungsanlage zu schaffen, bei der der für die Zuschaltung der Hilfsspannungsquelle zuständige Kondensator der Auslöseschaltung gegenüber einer Zerstörung infolge einer zu hohen negativen Spannung vom Dynamo geschützt ist.

Bei einer weiteren Ausführungsform soll im nicht betriebsbereiten Zustand, beispielsweise während der Lagerung eine zu schnelle Entladung der Hilfsspannungsquelle vermieden werden.

Bei der Beleuchtungsanlage ist erfindungsgemäß vorgesehen, daß das Relais einen weiteren Schaltkontakt aufweist, der das Zu- und Abschalten eines Widerstandes zwischen Dynamo und Masse bewirkt, wenn der Lampenstromkreis auf die Hilfsspannungsquelle umgeschaltet bzw. von dieser zurück auf den Dynamo geschaltet wird. Durch diesen zuschaltbaren Widerstand kann der Dynamo definiert belastet werden. Die Belastung wird dann vorgenommen, wenn das Relais von der Dynamoversorgung auf die Batterieversorgung umschaltet. Dadurch kann das plötzliche Ansteigen der Dynamospannung im Moment des Umschaltens verhindert werden, womit gleichzeitig sichergestellt ist, daß vom Dynamo keine Spannungsspitzen ausgehen, die ein ständiges Umschalten des Relais und damit ein Flackern der Beleuchtung verursachen würden.

Bei der elektrischen Beleuchtungsanlage gemäß der Erfindung ist weiterhin vorgesehen, daß parallel zum Kondensator der Auslöseschaltung eine Schutzdiode geschaltet ist.

Weiterhin kann parallel zum Eingang des Zeitschaltgliedes ein Widerstand geschaltet sein, der zusammen mit den Widerständen der Auslöseschaltung einen an der Hilfsspannungsquelle liegenden Spannungsteiler bildet, der so bemessen ist, daß bei eingebauter und funktionsfähiger Hilfsspannungsquelle und nicht geschaltetem Anschluß für den Dynamo ein Schalten des Relais über eine Ansteuerung des ersten Transistors verhindert wird.

Im folgenden wird eine bevorzugte Ausführungsform der erfindungsgemäßen Beleuchtungsanlage anhand einer Zeichnung erläutert.

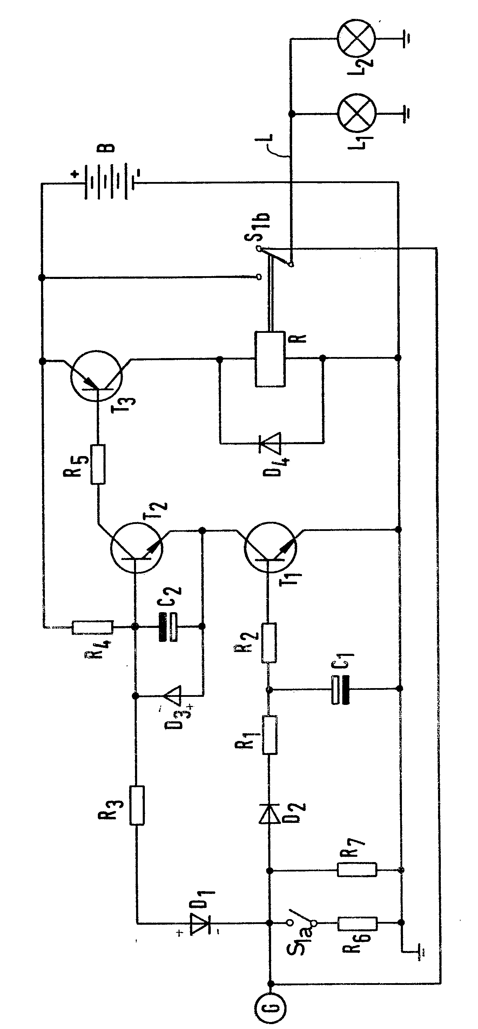

Die Zeichnung zeigt ein Schaltbild der elektrischen Beleuchtungsanlage für Fahrräder. Die Beleuchtungsanlage besteht aus einem Dynamo G, der über eine Diode D1 an eine Relais-Steuerschaltung, bestehend aus Transistoren T1, T2, T3 angeschlossen ist. Außerdem liegt der Dynamo G über eine Diode D2 und ein Zeitschaltglied, bestehend aus Widerständen R1, R2 und einem Kondensator C1, an der Relais-Steuerschaltung an. Der Kondensator C1 ist zwischen die Verbindung der beiden Widerstände R1, R2 einerseits und Masse andererseits geschaltet. Die Auslöseschaltung enthält einen Kondensator C2, der zwischen die Basis und den Emitter des Transistors T2 der Relais-Steuerschaltung geschaltet ist. Außerdem liegt zwischen der Basis des Transistors T2 und der Verbindung zwischen einer Hilfsspannungsquelle in Form einer Batterie B und dem Emitter des Transistors T3 ein Widerstand R4. Der Kollektor des Transistors T2 ist über einen Widerstand R5 mit der Basis des Transistors T3 verbunden. Ein Relais R liegt zwischen dem Kollektor des Transistors T3 und Masse; eine Diode D4 ist parallel zum Relais R geschaltet. Das Relais weist einen Schaltkontakt S1b auf, der an den Lampenstromkreis L geschaltet ist, welcher die Lampen L1, L2 enthält und normalerweise den Lampenstromkreis L mit dem Ausgang des Dynamos G verbindet.

Gemäß der Erfindung ist zwischen den Ausgang des Dynamos G und Masse ein weiterer Schaltkontakt S1a des Relais R geschaltet, der in Serienschaltung zu einem Widerstand R6 liegt. Im Normalzustand und im Falle der Speisung des Lampenkreises L durch den Dynamo G ist der Schaltkontakt S1a geöffnet, wie in der Zeichnung dargestellt ist. Parallel zu der Schaltung aus dem Schaltkontakt S1a und dem Widerstand R6 liegt ein Widerstand R7, dessen Funktion im folgenden noch erläutert wird.

Wie in der Zeichnung dargestellt ist, ist die Diode D1 mit ihrer Kathode an den Ausgang des Dynamos G geschaltet, während die Diode D2 mit ihrer Anode an die Verbindung zwischen dem Ausgang des Dynamos G und dem Relais-Schaltkontakt S1a bzw. dem einen Anschluß des Widerstands R7 geschaltet ist. Die Anode der Diode D1 liegt über den Widerstand R3 an dem Anschluß der Kathode einer Diode D3 an, die parallel zum Kondensator C2 geschaltet ist und mit ihrer Anode mit dem Emitter des Transistors T2 in Verbindung steht. Die Diode D4 liegt mit ihrer Kathode am Kollektor des Transistors T3 an und ist mit ihrer Anode an Masse geschaltet.

Der Wert des Widerstandes R1 liegt vorzugsweise bei 470 Ω, der Wert des Widerstandes R2 bei 100 kΩ, der Wert des Widerstandes R3 bei 200 kΩ. Der Wert des Widerstandes R4 liegt bei 1 MΩ, der Wert des Widerstandes R5 bei 4,7 kΩ, der Wert des Serienwiderstandes R6 zum Schaltkontakt S1a bei 4,7 Ω und der Wert des Widerstandes R7 bei 75 kΩ. Die Werte der Kondensatoren C1 und C2 liegen bei 220 μF und 3,3 μF.

Die Arbeitsweise der vorstehend beschriebenen Beleuchtungsanlage ist wie folgt:

Wenn bei Dynamobetrieb langsam angefahren wird, so ist das Relais R zunächst abgefallen. Der Kondensator C1 ist entladen, die Strecke T1, T2, T3 gesperrt. Steigt nun die Dynamospannung über die Schwellspannung von der Diode D2 und dem Transistor T1 an, d. h. über ca. 1 V, wird der Kondensator C1 geladen und der Transistor T1 leitend. Der Transistor T2 wird ebenfalls leitend, da über den Widerstand R4 die Basis des Transistors T2 gegen Emitter positiver wird. Das Relais R zieht an, und die Lampen L werden über den Relaiskontakt S1b auf die Hilfsspannungsquelle B geschaltet. Gleichzeitig schließt der Relaiskontakt S1a, der den Dynamo G definiert über R6 belastet. Wäre diese Belastung durch den Widerstand R6 nicht vorhanden, würde die unbelastete Dynamospannung plötzlich ansteigen und zum Abfallen des Relais führen.

Durch das Umschalten des Relaiskontakts S1b auf Dynamobetrieb wäre wieder eine Belastungsänderung gegeben, die zum erneuten Anziehen des Relais R führen würde, was zu einem wiederholten Schalten des Relais führt. Ein stabiler Schaltzustand des Relais R könnte deshalb nicht hergestellt werden. Dieser stabile Schaltzustand wird erfindungsgemäß durch den Relaiskontakt S1a und den Widerstand R6 hergestellt: Steigt die Dynamospannung weiter auf über 2 V an, wird die Basis des Transistors T2 über die Strecke D1, R3 negativer, und die Schwellspannung des Transistors T2 wird unterschritten, so daß dieser in den gesperrten Zustand übergeht. Dadurch wird auch der Transistor T3 gesperrt. Das Relais R fällt ab. Die Lampen L werden wieder an den Dynamo G geschaltet: der Relaiskontakt S1a schaltet den Widerstand R6 wieder ab. Die Beleuchtung wird jetzt durch den Dynamo gespeist.

Wird durch Verlangsamen der Geschwindigkeit die Dynamospannung wieder kleiner und fällt unter 1,5 V ab, steigt das Basispotential des Transistors T2 gegen den Emitter wieder an, und der Schwellwert von T2 wird überschritten, was den Transistor T2 wieder in den leitenden Zustand führt. Dadurch wird auch der Transistor T3 leitend, das Relais R zieht an, und die Lampen L werden über den Relaiskontakt S1b auf die Hilfsspannungsquelle B geschaltet. Die Beleuchtung wird nun durch die Hilfsspannungsquelle B gespeist.

Wird die Geschwindigkeit weiter verringert und die Dynamospannung Null, wird der Kondensator C1 nicht mehr über die Strecke D2, R1 nachgeladen und entlädt sich über die Strecke R2, $R_{BE}$, T1. Nach Ablauf der Zeitkonstanten von 2 bis 3 Minuten ist der Kondensator C1 entladen. Der Transistor T1 sperrt, was zum Sperren des Transistors T3 führt. Das Relais R fällt ab und die Schaltung nimmt wieder den Ausgangszustand ein.

Die Diode D3 begrenzt die Emitter-Basis-Spannung des Transistors T2 auf 0,7 V und schützt diesen gegen Spannungsdurchschlag. Der Kondensator C2 dient zur Glättung der negativen Spannungshalbwellen, die vom Dynamo über D1, R3 kommen.

Der Widerstand R7 und der Widerstand R4 bilden zusammen einen Spannungsteiler. Aufgrund der speziellen Wahl dieser Widerstände wird bei eingebauter und funktionsfähiger Hilfsspannungsquelle B und nicht geschaltetem Anschluß für den Dynamo G, beispielsweise während der Lagerung, verhindert, daß das Relais R periodisch anzieht und abfällt. Der Widerstand R7 teilt die Batteriespannung zusammen mit dem Widerstand R4 soweit ab, daß sich der Kondensator C1 über die Hilfsspannungsquelle B nicht aufladen kann. Der Ruhestrom liegt dadurch bei etwa 30 μA, so daß sich die Hilfsspannungsquelle B frühestens nach 33 000 Stunden entladen kann.

**Patentansprüche**

1. Elektrische Beleuchtungsanlage für Fahrräder mit einem Dynamo (G), mit einem Ansteuerkreis, der in Reihe einen ersten ($T_1$) und einen zweiten ($T_2$) Transistor aufweist, bei deren gleichzeitigem Ansteuern ein Relais einen Lampenstromkreis (L) vom Dynamo (G) auf eine Hilfsspannungsquelle (B) umschaltet, mit einem Zeitschaltglied ($C_1$, $R_1$, $R_2$), das oberhalb eines ersten, unteren Grenzwertes der Dynamospannung anspricht, um den ersten Transistor ($T_1$) anzusteuern, wobei das Zeitschaltglied in seiner Rückstellung zeitverzögert ist, sowie mit einer einen Glättungskondensator beinhaltenden Auslöseschaltung, die die im Ruhezustand vorhandene Ansteuerung des zweiten Transistors ($T_2$) bei Überschreiten eines zweiten, höheren Grenzwertes der Dynamospannung unterbricht, dadurch gekennzeichnet, daß das Relais (R) einen weiteren Schaltkontakt (S1a) aufweist, der das Zu- und Abschalten eines Widerstandes (R₆) zwischen Dynamo (G) und Masse bewirkt, wenn der Lampenstromkreis (L) auf die Hilfsspannungsquelle (B) umgeschaltet bzw. von dieser zurück auf den Dynamo (G) geschaltet wird.

2. Elektrische Beleuchtungsanlage nach Anspruch 1, dadurch gekennzeichnet, daß parallel zum Kondensator (C₂) der Auslöseschaltung eine Schutzdiode (D₃) geschaltet ist.

3. Elektrische Beleuchtungsanlage nach Anspruch 1 oder 2, dadurch gekennzeichnet, daß parallel zum Eingang des Zeitschaltgliedes (C₁, R₁, R₂) ein Widerstand (R₇) geschaltet ist, der zusammen mit den Widerständen (R₃, R₄) der Auslöseschaltung einen an der Hilfsspannungsquelle (B) liegenden Spannungsteiler bildet, der so bemessen ist, daß bei eingebauter und funktionsfähiger Hilfsspannungsquelle (B) und nicht geschaltetem Anschluß für den Dynamo (G) ein Schalten des Relais (R) über eine Ansteuerung des ersten Transistors (T₁) verhindert wird.

**Claims**

1. Electric lighting system for bicycles, comprising a dynamo (G); a control circuit having, in a series, a first (T₁) and a second (T₂) transistor such that when these are activated simultaneously, a relay switches a lamp circuit (L) from the dynamo (G) to an auxiliary voltage source (B); a time switch (C₁, R₁, R₂) which responds above a first, lower limit of the dynamo voltage to activate the first transistor (T₁), the resetting movement of this time switch being subject to a time delay; and further comprising a release circuit which contains a smoothing capacitor and which interrupts the activation of the second transistor (T₂) existing in the quiescent state rest when a second, higher limit of the dynamo voltage is exceeded, characterised in that the relay (R) has a further switch contact (S1a) which effects the switching on and off of a resistor (R₆) between the dynamo (G) and earth when the lamp circuit (L) is switched over to the auxiliary voltage source (B) or back from this source to the dynamo (G).

2. Electric lighting system according to claim 1, characterised in that a protective diode (D₃) is connected in parallel with the capacitor (C₂) of the release circuit.

3. Electric lighting system according to claim 1 or claim 2, characterised in that a resistor (R₇) is connected in parallel with the input of the time switch (C₁, R₁, R₂), which resistor (R₇), together with the resistors (R₃, R₄) of the release circuit, forms a voltage divider connected to the auxiliary voltage source (B), which voltage divider is proportioned so that when the auxiliary voltage source (B) is installed and functional and the connection for the dynamo (G) is not switched on, switching of the relay (R) by activation of the first transistor (T₁) is prevented.

**Revendications**

1. Dispositif d'éclairage électrique pour bicyclettes, dispositif comportant une dynamo (G) et comportant un circuit de commande dans lequel sont montés en série un premier transistor (T₁) et un second transistor (T₂) lors de la commande simultanée desquels un relais commute de la dynamo (G) sur une source de tension auxiliaire (B) un relais d'alimentation de lampes (L), le dispositif comportant un organe de commutation temporisé (C₁, R₁, R₂) qui réagit au-dessus d'une première valeur limite inférieure de la tension de la dynamo pour commander le premier transistor (T₁), cet organe temporisé étant retardé dans sa remise à l'état initial, le dispositif comportant également un circuit de déclenchement contenant un condensateur de lissage et qui interrompt la commande, à l'état de repos, du second transistor (T₂) lors du dépassement d'une seconde valeur limite supérieure de la tension de la dynamo, dispositif caractérisé en ce que le relais (R) comporte un autre contact de commutation (S1a) assurant la mise en circuit et hors circuit d'une résistance (R₆) entre la dynamo (G) et la masse lorsque le circuit d'alimentation de lampes (L) est commuté sur la source de tension auxiliaire (B) ou bien est commuté en retour de cette source sur la dynamo (G).

2. Dispositif d'éclairage électrique selon la revendication 1, caractérisé en ce qu'une diode de protection (D₃) est branchée en parallèle sur le condensateur (C₂) du circuit de déclenchement.

3. Dispositif d'éclairage électrique selon la revendication 1 ou 2, caractérisé en ce qu'une résistance (R₇) est branchée en parallèle sur l'entrée de l'organe de commutation temporisé (C₁, R₁, R₂) cette résistance constituant avec les résistances (R₃, R₄) du circuit de déclenchement, un diviseur de tension placé sur la source de tension auxiliaire (B) et qui est dimensionné de façon que la source de tension auxiliaire (B) est installée et en mesure de fonctionner, et que le raccordement à la dynamo (G) n'est pas connecté, une commutation du relais (R) par l'intermédiaire d'une commande du premier transistor (T₁) est empêchée.